# EUROPEAN PATENT APPLICATION

(11) **EP 0 522 653 A1**
(43) Date of publication of application: **13.01.1993**
(21) Application number: 92202064.9
(22) Date of filing: 07.07.1992
(51) Int. Cl.: C08K 5/51, C08L 51/04, C08L 55/02

(54) **Flame-retardant polymer composition**

(30) Priority: 12.07.1991 NL 9101228
(71) Applicant: DSM N.V., NL-6411 TE Heerlen (NL)
(72) Inventor: Frusch, Johannes Maria, 6121 HT Born (NL); Truyen, Jan Hubert, 6414 BB Heerlen (NL); Hulskotte, Richerdes Johanna Mathilda, 6164 AM Geleen (NL)

(57) **Abstract**

The invention relates to a polymer composition comprising a graft copolymer based on a copolymer of a vinyl aromatic monomer, an acrylonitrile monomer, and optionally a third monomer, grafted on a rubber and a flame retardant phosphorus compound which contains at least two mole of phosphorus per mole of compound, characterised in that the composition further comprises a char-forming component.

The presence of both the char-forming component and the phosphorus compound results in a synergism with respect to the flame retardant properties of the polymer composition. Because of this, only small amounts of these components need be used, so that the adverse effects on the mechanical properties are significantly limited.

## Description

The invention relates to a polymer composition comprising a graft copolymer based on a vinylaromatic monomer, an acrylonitrile monomer and, optionally a third monomer, grafted on a rubber and a flame-retardant phosphorus compound which contains at least two mole of phosphorus per mole of compound.

The use of metal salts and metalloid salts of (methyl methyl)phosphorous acid as a flame-retardant component in polymer compositions is known from GB-A-2,211,850. A drawback of the use of such phosphate compounds is that relatively large amounts have to be added to obtain a polymer composition that is sufficiently flame-retardant. This results in deterioration of the mechanical properties of the polymer composition. From the viewpoint of the mechanical properties it is desirable to add as little metal salts or metalloid salts of (methyl methyl)phosphorous acid as possible to a polymer composition.

The use of bis- and polyphosphates as flame-retardant component is commonly known and is described in for example JP-A-63117057. These compounds, however, have a very strong softening effect. A problem in dosing these compounds is finding the right balance between the flame-retardant effect and the softening effects. In general, it appears that the dosage of the minimum amount required to obtain a polymer composition with sufficient flame-retardant properties results in a significant deterioration of the mechanical properties.

The aim of the present invention is to provide a polymer composition of the aforementioned type which has both good flame-retardant properties and good mechanical properties.

The polymer composition according to the invention is characterised in that the composition further comprises a char-forming component.

It has been found that the addition of a char-forming component to a polymer composition of the aforementioned type surprisingly results in synergism with respect to the flame-retardant properties. This makes it unnecessary to add relatively large amounts of a phosphorus compound. Owing to the synergism, relatively small amounts of the char-forming component and the phosphorus compound already have the desired flame-retardant effect. In this manner flame-retardant polymer compositions are obtained while the adverse effects on the mechanical properties are significantly limited.

In a preferred embodiment of the invention, the polymer composition comprises the graft copolymer and further
A) 0.1-25 wt.% of the flame retardant phosphorus compound,
B) 0.1-30 wt.% of the char-forming component,
the weight percentages being based on the total weight of the graft copolymer, component A) and component B).

The graft copolymers that can be used in the polymer composition according to the invention are synthesized by generally known methods. Examples of such methods are processes for mass polymerisation, emulsion polymerisation, suspension polymerisation and mass-suspension polymerisation. The usual additives may be used in the polymerisation. Examples of such substances are chain-length regulators, emulsifiers and compounds that supply free radicals.

Graft copolymers that can be used in a polymer composition according to the invention comprise a vinyl aromatic monomer, an acrylonitrile monomer and, optionally a third monomer which monomers are polymerised in the presence of a rubber.

The vinylaromatic monomer can be chosen from the group comprising styrene, α-methylstyrene and styrene derivatives which are substituted at the aromatic ring. Suitable substituents are alkyl groups with 1-8 carbon atoms and halogens. Optionally, a mixture of the aforementioned vinylaromatic compounds can be used. Acrylonitrile may optionally be entirely or partially replaced by methacrylonitrile. Suitable third monomers are for example methylmethacrylate, ethylacrylate, unsaturated dicarboxylic acids, unsaturated dicarboxylic anhydrides such as maleic anhydrides and imide derivatives thereof such as maleimide and N-phenylmaleimide.

The rubber to be used as a grafting agent in the graft copolymer is selected from the known rubbers. Generally, these rubbers have a glass transition temperature of below -10°C. Preferably, use is made of polybutadiene homopolymers or of butadiene copolymers with a butadiene content of 60-90 wt.%. If other dienes, such as isoprene or the lower alkyl esters of alkyl acid are used as a comonomer, the butadiene content of the rubber can be reduced to 30 wt.% without the mechanical properties of the graft copolymer being adversely affected.

Preferably, the graft copolymer is acrylonitrile-butadiene-styrene (ABS), acrylonitrile-styrene-acrylate (ASA) or an ethylene-propylene-diene rubber, polymerised with styrene and acrylonitrile (AES). More in particular, the graft copolymer is ABS.

Flame retardant phosphorus compounds which can be used in a polymer composition according to the invention are phosphorus compounds which contain at least two mole of phosphorus per mole of compound. Preferably phosphorus compounds with structural formula's I to IV are used in the polymer composition according to the invention. Phosphorus compounds with structural formula's I to III are well known bis- and oligomeric polyphosphates. See the formula sheet for formula's I to III, where
- R₁ through R₁₅ are hydrogen compounds, which may be identical or different from each other,
- X₁, through X₃ are halogens
- m and r are, independently from each other, 0 or an integer chosen from 1 to 4,
- n and p are integers chosen from 1 to 30,
- q₁ through q₁₅, independently from each other, are 0 or 1.
The hydrocarbon compounds R₁-R₁₅ are halogenated if so desired. The preparation method of such bis and oligomeric polyphosphates is described in for example GB-A-2,043,083.

Phosphorus compounds with structural formula IV are the known metal or metalloid salts of a phosphorous acid. R is an alkyl group, with 1-3 carbon atoms, which can be substituted by several halogens or hydroxy groups. R' is hydrogen or an alkyl group with 1-3 carbon atoms. The metal or metalloid (M) is chosen from groups IIA, IIB, IIIA, IVA and VA of the Periodic Table and has a valency s; s is an integer which is dependent on the metal chosen. The reader is referred to the formula sheet for formula IV too.

US-A-4,973,727 describes the synthesis of metal salts and metalloid salts of (methyl methyl) phosphorous acid. It is also mentioned that these compounds are suitable as a flame-retardant component in mixtures containing other polymers. Examples of such polymers are acrylonitrile-butadiene-styrene copolymers, polycarbonates and polyphenylene oxides. The use of such phosphonates is also described in EP-A-343109.

Preferably, use is made of compounds of the group of arylenediphosphates with structural formula I, where n = 1, and aluminium tri(monomethyl methylphosphonate). More in particular, the flame-retardant phosphorus compound is chosen from the group comprising hydroquinone bis(diphenylphosphate), resorcinol bis(diphenylphosphate) and aluminium tri(monomethyl methylphosphonate). Within the scope of the invention use can also be made of the oligomeric or polymeric equivalents of the flame-retardant phosphorus compounds. Optionally, use may be made of a mixture of the aforementioned compounds.

Preferably, the flame-retardant phosphorus compound is used in amounts of 5-15 wt.%, in view of the required optimisation of the flame-retardant and mechanical properties. The weight percentage is based on the total weight of graft copolymer, char-forming component and phosphorus compound.

The char-forming component which can be used in a polymer composition according to the invention can be chosen from the group comprising novolak resins and polyphenylene oxide ethers.

Novolak resins are mixtures of low-molecular weight linear polymers of phenol and substituted phenols with formaldehyde and contain no free methylol groups. Such resins are described in the Encyclopedia of Polymer Science and Engineering, Vol. 11, pp. 45-95. Examples of substituted phenols are cresols, resorcinol, alkylated phenols such as p-tert-butylphenol and p-octylphenol and xylenols. Aryl-substituted phenols such as p-phenylphenol are also suitable. Preferably, use is made of phenol, cresol or resorcinol, or a mixture of these substances.

The use of polyphenylene oxide ethers as char-forming component is known per se from DE-A-3526549 but the polymer composition according to this patent requires an extra copolymer to obtain the desired mechanical properties. This is not the case according to the present invention. The preparation processes of polyphenylene oxide ethers are commonly known and are described in, for example, US-A-3306874, US-A-3306875 and US-A-3257358. Use may also be made of polyphenylene oxide ethers containing different monomeric units.

Preferably, the char-forming component is used in amounts of 5-25 wt.%, in view of the desired optimisation of flame-retardant and mechanical properties. The weight percentages is based on the total weight of graft copolymer, char-forming agent and phosphorus compound.

The polymer composition according to the invention can be obtained by mixing the individual components in a suitable, commonly known, mixing device. As a mixing device use may be made of for example a batch kneader, a single- or twin-screw extruder or a static mixer.

Optionally, the usual additives may be added to the polymer composition according to the invention. Examples of such additives are stabilizers, lubricants, kaolin, glass, pigments, organic or inorganic fillers or reinforcing agents.

Optionally, other, slightly miscible polymers may be added to the polymer composition according to the invention. Examples of such polymers are polycarbonates, polyamides, polyesters, copolymers of a vinylaromatic monomer and an unsaturated carboxylic anhydride, copolymers of a vinylaromatic monomer and acrylonitrile and polycarboxylic acids. In particular, the mixing of the polymer composition according to the invention with polycarbonate or a copolymer of styrene and maleic anhydride, which may optionally be entirely or partially imidated, results in a polymer blend with very good flame-retardant and mechanical properties.

A very suitable polymer blend is obtained if 5-95 wt.% halogen-free polycarbonate, relative to the total weight of the graft copolymer and the polycarbonate, is added. This is also the case when 5-70 wt.% copolymer of a vinylaromatic monomer and maleic acid and/or maleic anhydride, relative to the total weight of the graft copolymer and the aforementioned copolymer, is added to the polymer composition. The polymer blends thus obtained also show synergism of the char-forming component and the phosphorus compound, so that polymer blends are obtained that have good mechanical properties besides very good flame-retardant properties.

The invention is further elucidated with the help of the following examples and comparative experiments, without being limited hereto.

### Examples and comparative experiments

### Example I

10 wt.% hydroquinone bis(diphenylphosphate) (E89037, from AKZO) and 10 wt.% polyphenylene oxide ether (PPO 0.46 IV, from General Electric) were mixed in (with the aid of a Brabender plasticorder) with a 1:1 (by weight) mixture of acrylonitrile-butadiene-styrene (ABS, TZ 220, from DSM) and styrene-acrylonitrile copolymer (SAN, RZ 034, 27 wt.% acrylonitrile, Melt Flow Index 35 dg/min, as measured according to ISO 1133/19; obtained from DSM). The flame-retardant properties of this polymer composition (expressed in the oxygen index, LOI) were measured according to ASTM D-2863-77. Finally, the Vicat softening temperature was determined of the polymer composition obtained (Vicat B, 50 unannealed, according to ISO-306). Table 1 shows the results of these tests.

### Comparative experiments A-C

The flame-retardant properties (expressed in the oxygen index, LOI, according to ASTM-D-2863-77) were determined of a 1:1 (by weight) mixture of acrylonitrile-butadiene-styrene (ABS, TZ 220, from DSM) and styrene-acrylonitrile copolymer (SAN, RZ 034, from DSM) (comparative experiment A).

This was then mixed (with the aid of a Brabender plasticorder) with 10 wt.% hydroquinone bis(diphenylphosphate) (E89037, from AKZO) (comparative experiment C) or 10 wt.% polyphenylene oxide ether (PPO 0.46 IV, from General Electric) (comparative experiment B). The flame-retardant properties of these polymer compositions were also measured according to ASTM-D-2863-77. Finally, the Vicat softening temperature was determined of all of the polymer compositions obtained (Vicat B, 50 unannealed, according to ISO-306). Table 1 shows the results of these experiments.

**TABLE 1**

| Experiment/Example | I | A | B | C |
|---|---|---|---|---|
| wt.% ABS/SAN | 80 | 100 | 90 | 90 |
| wt.% PPO | 10 | | 10 | |
| wt.% E 89037 | 10 | | | 10 |
| LOI | 24.5 | 18.0 | 18.0 | 19.0 |
| Vicat B [°C] | 79.7 | 98.1 | 99.0 | 77.6 |

Table 1 shows that the synergism of the char-forming component and the flame-retardant phosphorus compound results in good flame-retardant properties. During the comparative experiments attempts were also made to obtain flame-retardant properties at the same level as those of example I using only one of the components (PPO or E89037). However, this meant adding such large amounts of these components that the mechanical properties could no longer be determined.

### Example II

10 wt.% resorcinol bis(diphenylphosphate) (CR 733 S, from Daihachi) and 20 wt.% novolak resin (Durez 22091, from Occidental Chemical) were mixed in (with the aid of a Brabender plasticorder) with a mixture of acrylonitrile-butadiene-styrene (ABS, TZ220, from DSM) and a copolymer of styrene and acrylonitrile (27 wt.% acrylonitrile, RZ 034, from DSM). The flame-retardant properties (expressed in the oxygen index, LOI) of this polymer composition were measured according to ASTM D-2863-77. Finally, the Vicat softening temperature was determined of the polymer composition obtained (Vicat B, 50 unannealed, according to ISO-306). Table 2 shows the results of the experiments.

### Comparative experiments D-F

The flame-retardant properties (expressed in the oxygen index, LOI, according to ASTM D-2863-77) were determined of a mixture of acrylonitrile-butadiene-styrene (ABS, TZ220, from DSM) and a copolymer of styrene and acrylonitrile (RZ 034, from DSM) (comparative experiment D).

Then 10 wt.% resorcinol bis(diphenylphosphate) (CR 733 S, from Daihachi) (comparative experiment E) or 20 wt.% novolak resin (Durez 22091, from Occidental Chemical) (comparative experiment F) was mixed in with this (with the aid of a Brabender plasticorder). The flame-retardant properties of these polymer compositions were also determined according to ASTM-D-2863-77. Finally, the Vicat softening temperature was determined of all the polymer compositions obtained (Vicat B, 50 unannealed, according to ISO-306). Table 2 shows the results of the experiments.

**TABLE 2**

| experiment/example | II | D | E | F |
|---|---|---|---|---|
| wt.% ABS | 45 | 45 | 45 | 45 |
| wt.% SAN | 25 | 55 | 45 | 35 |
| wt.% Durez 22091 | 20 | | | 20 |
| wt.% CR 733 S | 10 | | 10 | |
| LOI | 29.0 | 18.0 | 20.0 | 19.0 |
| Vicat B [°C] | 72.5 | 98.1 | 82.7 | 91.6 |

Table 2 also shows that the synergism of the char-forming component and the flame-retardant phosphorus compound results in very good flame-retardant properties. These flame-retardant properties are not obtainable with only one of these components without a substantial loss of mechanical properties. Example II shows that very good flame-retardant properties are obtained with very little loss of mechanical properties, which are still at a very suitable level.

### Example III

10 wt.% hydroquinone bis(diphenylphosphate) (E89037, from AKZO) and 10 wt.% polyphenylene oxide ether (PPO 0.46 IV, from General Electric) were mixed in (with the aid of a Brabender plasticorder) with a mixture of acrylonitrile-butadiene-styrene (ABS, TZ220, from DSM) and a polycarbonate (Xantar, type P-24). The flame-retardant properties of this polymer composition (expressed in the oxygen index, LOI) were measured according to ASTM D-2863-77. Finally, the Vicat softening temperature of the polymer composition obtained was measured (Vicat B, 50 unannealed, according to ISO-306). Table 3 shows the results of the experiment.

### Comparative experiments G-I

The flame-retardant properties (expressed in the oxygen index, LOI, according to ASTM D-2863-77) were determined of a mixture of acrylonitrile-butadiene-styrene (ABS, TZ220, from DSM) and a polycarbonate (Xantar, type P-24) (comparative experiment G).

Then, 10 wt.% hydroquinone bis(diphenylphosphate) (E89037, from AKZO) (comparative experiment I) or 10 wt.% polyphenylene oxide ether (PPO 0.46 IV, from General Electric) (comparative experiment H) was mixed in with this (with the aid of a Brabender plasticorder). The flame-retardant properties of these polymer compositions were also determined according to ASTM D-2863-77. Finally, the Vicat softening temperature was determined of all of the polymer compositions obtained (Vicat B, 50 unannealed, according to ISO-306). Table 3 shows the results of the experiments.

**TABLE 3**

| experiment/example | III | G | H | I |
|---|---|---|---|---|
| wt.% ABS | 40 | 50 | 45 | 45 |
| wt.% PC | 40 | 50 | 45 | 45 |
| wt.% PPO | 10 | | 10 | |
| wt.% E89037 | 10 | | | 10 |
| LOI | 23.5 | 20.5 | 19.5 | 20.5 |
| Vicat B [°C] | 88.4 | 113.1 | 112.8 | 87.4 |

Table 3 also shows that the synergism of the char-forming component and the flame-retardant phosphorus compound results in good flame-retardant properties. These flame-retardant properties are not obtainable with only one of these components without substantial loss of mechanical properties. Example III shows that very good flame-retardant properties are obtained with very little loss of mechanical properties, which are still at a suitable level.

### Example IV

A mixture was prepared of 50 wt.% acrylonitrile-butadiene-styrene (ABS, TZ220, from DSM) and 50 wt.% copolymer of styrene and maleic anhydride (28 wt.% maleic anhydride, Mₙ = 110,000). Then 80 parts by weight of this mixture were mixed with 10 parts by weight of novolak resin (Durez 31802, from Occidental Chemical) and 10 parts by weight of aluminium tri(monomethyl methylphosphonate) (Reoflam P410, from Ciba Geigy). The flame-retardant properties (LOI) of this polymer composition were determined (ASTM D-2863-77). The oxygen index (LOI) was 28.0.

### Example V

A mixture was prepared of 50 wt.% acrylonitrile-butadiene-styrene (ABS, TZ220, from DSM) and 50 wt.% copolymer of styrene and maleic anhydride (28 wt.% maleic anhydride, Mₙ = 110,000). Then 80 parts by weight of this mixture were mixed with 10 parts by weight novolak resin (Durez 31802, from Occidental Chemical), 5 parts by weight of aluminium tri(monomethyl methylphosphonate) (Reoflam P410, from Ciba Geigy) and 5 parts by weight resorcinol bis(diphenylphosphate) (CR 733 S, from Daihachi). The flame-retardant properties (LOI) of this polymer composition were determined (according to ASTM D-2863-77). The oxygen index (LOI) was 27.5

The examples and comparative experiments show that the synergism resulting from the addition of both the char-forming component and the flame retardant phosphorus compound according to the invention leads to very good flame-retardant properties. They also show that the loss of mechanical properties, as characterised by the Vicat softening temperature, is very small.

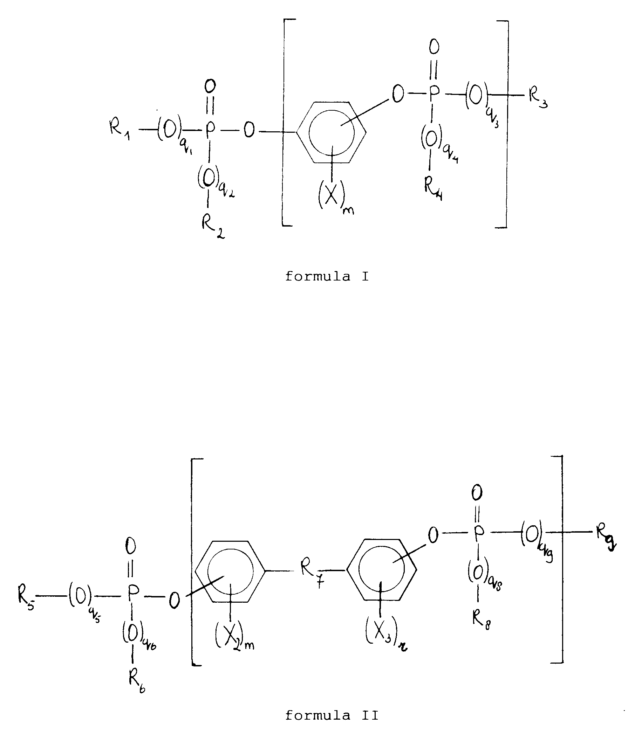

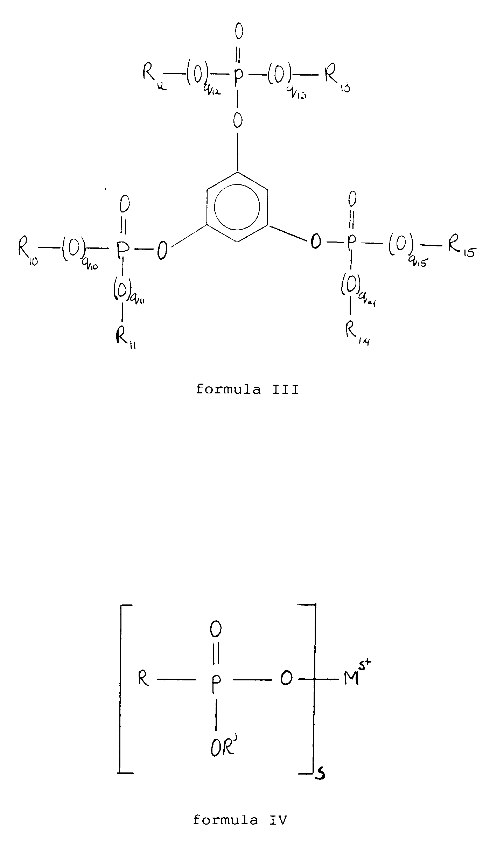

## Claims

1. Polymer composition comprising a graft copolymer based on a copolymer of a vinyl aromatic monomer, an acrylonitrile monomer and, optionally, a third monomer, grafted on a rubber, and a flame retardant phosphorus compound which contains at least two mole of phosphorus per mole of compound, characterised in that the composition further comprises a char-forming component.

2. Polymer composition according to claim 1, characterised in that the flame retardant phosphorus compound has a structural formula I, where
- R¹ through R⁴ are hydrocarbon compounds, which may be identical or different,
- X¹ is a halogen and m is 0 or an integer chosen from 1 to 4,
- n is an integer chosen from 1 to 30, and
- q¹ through q⁴, independently from each other, are 0 or 1.

3. Polymer composition according to claim 2, characterised in that the flame retardant phosphorus compound is an arylene diphosphate with structural formula I, where n = 1.

4. Polymer composition according to claim 3, characterised in that the flame retardant phosphorus compound is resorcinol bis(diphenylphosphate).

5. Polymer composition according to claim 3, characterised in that the flame retardant phosphorus compound is hydroquinone bis(diphenylphosphate).

6. Polymer composition according to claim 1, characterised in that the flame retardant phosphorus compound has a structural formula II, where
- R₅ through R₉ are hydrocarbon compounds, which may be identical or different,
- X₂ and X₃ are halogens,
- m and r are, independently from each other, 0 or an integer chosen from 1 to 4,
- p is an integer chosen from 1 to 30, and
- q₅ through q₉, independently from each other, are 0 or 1.

7. Polymer composition according to claim 1, characterised in that the flame retardant phosphorus compound has a structural formula III, where
- R₁₀ through R₁₅ are hydrocarbon compounds, which may be identical or different, and
- q₁₀ through q₁₅, independently from each other, are 0 or 1.

8. Polymer composition according to claim 1, characterised in that the flame retardant phosphorus compound has a structural formula IV, where
- R is an alkyl group of 1-3 C atoms, whether or not subtituted by one or more halogens and/or hydroxy groups,
- R' is hydrogen or an alkyl group of 1-3 C atoms,
- M is a metal or metalloid from any of the groups IIA, IIB, IIIA, IVA and/or VA of the Periodic Table; S is the valency number.

9. Polymer composition according to claim 8, characterised in that the flame retardant phosphorus compound is aluminium tri(monomethyl methylphosphonate).

10. Polymer composition according to claim 1, characterised in that the flame retardant phosphorus compound is selected from the group comprising hydroquinone bis(diphenylphosphate), resorcinol bis(diphenylphosphate) and aluminium tri(monomethyl methylphosphonate) or mixtures thereof.

11. Polymer composition according to one of the claims 1 to 10, characterised in that besides the graft copolymer the composition comprises:
A) 0.1-25 wt% of the flame retardant phosphorus compound,
B) 0.1-30 wt% of the char-forming compound,
the weight percentages being based on the total weight of the graft copolymer, component A) and component B).

12. Polymer composition according to claim 11, characterised in that the polymer composition comprises 5-15 wt.% of flame retardant phosphorus compound, the weight percentages being based on the total weight of the graft copolymer, the char forming component and the phosphorus compound.

13. Polymer composition according to one of the claims 11 or 12, characterised in that the polymer composition comprises 5-25 wt.% of char-forming component, the weigth percentages being based on the total weight of the graft copolymer, the char-forming component and the phosphorus compound.

14. Polymer composition according to one of the claims 11 to 13, characterised in that the char-forming component is a polyphenylene oxide or a novolac resin or a mixture of both.

15. Polymer blend comprising a polymer composition according to any of the claims 1-14 and a halogen-free polycarbonate.

16. Polymer blend comprising a polymer composition according to any of the claims 1-14 and a copolymer of a vinyl aromatic monomer and maleic acid and/or maleic anhydride.
